# FASCICULE DE BREVET EUROPEEN

(11) **EP 0 709 989 B1**
(45) Date de publication et mention de la délivrance du brevet: **05.01.2000**
(21) Numéro de dépôt: 95402413.9
(22) Date de dépôt: 27.10.1995
(51) Int. Cl.: H04L 12/56

(54) **Procédé de gestion décentralisée du routage de communications d'un réseau de commutateurs de paquets**
Verteiltes Verfahren zum Verwalten der Kommunikationsweglenkung in einem Packetübertragungsnetz
Distributed routing management method in a packet communication network

(30) Priorité: 28.10.1994 FR 9412991
(43) Date de publication de la demande: 01.05.1996
(73) Titulaire: SAGEM S.A., 75116 Paris (FR)
(72) Inventeur: Giovanni, Marc, F-75013 Paris (FR)
(74) Mandataire: Arnaud, Jean Pierre Alfred

(56) Documents cités:
- EP-A- 0 221 360
- EP-A- 0 571 261
- IEEE INFOCOM, Mars 1988 USA, pages 593-602, K.J. LEE ET AL. 'Distributed routing using topology database in large computer networks'
- IEEE MILITARY COMMUNICATIONS CONFERENCE, vol. 1, Octobre 1989 USA, pages 671-676, J.B. CAIN ET AL. 'A class of adaptive routing and link assignment algorithms for large-scale networks with dynamic topology'

## Description

La présente invention concerne la gestion décentralisée du routage des communications dans un réseau maillé de commutateurs de paquets.

Un réseau maillé de commutateurs de paquets comprend des commutateurs de paquets qui sont reliés les uns aux autres par des liaisons primaires. La topologie du réseau est définie par les commutateurs de paquets actifs et par les liaisons primaires actives disposées chacune entre deux commutateurs de paquets. Cette topologie peut présenter des changements d'états lors de pannes de liaisons ou de pannes de commutateurs de paquets, ou lors de la connexion de nouveaux commutateurs de paquets ou de nouvelles liaisons primaires entre des commutateurs de paquets.

La gestion d'un tel réseau maillé peut être isolée, c'est-à-dire que le calcul du routage des communications est alors réalisé indépendamment par chaque commutateur de paquets en fonction de ses informations locales, c'est-à-dire de la charge de ses liaisons primaires. Aucune information de routage n'est échangée entre les commutateurs de paquets voisins. La gestion peut aussi être de type centralisé dans lequel un centre de commande tient à jour l'état global du réseau et calcule les chemins les plus courts ou les plus rapides, et distribue des tables de routage ou des commandes de routage à tous les commutateurs de paquets, comme décrit par exemple, dans le document EP-A-0 221 360.

L'invention ne concerne pas ces deux types de gestion, mais un troisième type, dit "décentralisé", dans lequel le calcul du routage est réalisé en parallèle par tous les commutateurs de paquets qui contiennent des tables de routage et qui coopèrent par échange d'informations globales ou partielles d'états entre eux.

Cette gestion décentralisée peut être réalisée de deux manières essentielles, soit par interrogation des commutateurs de paquets voisins, comme décrit par exemple dans le document EP-A-0 352 041, soit au contraire par transmission d'informations par un commutateur de paquets dès qu'un changement s'est produit dans ce commutateur.

L'invention concerne uniquement ce dernier type de gestion, c'est-à-dire la gestion décentralisée d'un réseau dans lequel les commutateurs de paquets émettent des informations vers les commutateurs de paquets voisins chaque fois qu'ils ont apporté une modification à leurs tables de routage.

Les informations échangées peuvent être soit de simples informations topologiques, c'est-à-dire représentatives de l'indisponibilité d'une ancienne liaison ou de la disponibilité d'une nouvelle liaison primaire, soit des informations plus élaborées sous forme de chemins prévus pour l'accès à des commutateurs de paquets distants.

L'invention concerne les procédés de gestion décentralisée de ce dernier type, c'est-à-dire dans lesquels les commutateurs de paquets échangent des informations représentatives des chemins uniquement lorsque ces chemins ont subi des modifications, à l'initiative du commutateur de paquets ayant déterminé un tel changement de chemin dans ses propres tables de routage.

Bien que l'invention s'applique à divers procédés de gestion décentralisée dans lesquels les commutateurs de paquets voisins échangent des données représentatives des chemins contenus dans les tables de routage en cas de changement de ces tables, on la décrit dans le cas particulier du procédé décrit dans le document EP-A-0 571 261 qui est un exemple récent et performant de procédé de ce type.

Plus précisément, le document EP-A-0 571 261 concerne un procédé de gestion décentralisée dans lequel chaque commutateur de paquets mémorise une collection de tables de routage comportant une table affectée à chaque autre commutateur de paquets et ayant un nombre d'éléments au moins égal au nombre de liaisons primaires de ce commutateur de paquets. A chaque modification de la disponibilité d'une liaison primaire entre deux commutateurs de paquets, le procédé comprend la modification, par chacun des deux commutateurs de paquets adjacents à cette modification, de ses propres tables de routage concernées par cette modification, la transmission, par chacun des deux commutateurs de paquets adjacents et par chacune de ses propres liaisons primaires, d'une information de routage représentative des modifications apportées à ses propres tables de routage, puis la modification éventuelle, par chaque commutateur de paquets qui reçoit cette information, de ses propres tables de routage ; si ce commutateur de paquets a apporté une modification, il la transmet à tous ses commutateurs voisins, sauf celui dont il a reçu l'information qui est la cause de la modification. Les étapes sont répétées tant qu'une information de routage provoque une modification de table de routage dans un commutateur de paquets quelconque.

Ce procédé présente l'avantage d'éviter absolument le bouclage et de permettre une convergence rapide d'une modification. Par exemple, dans le cas d'un réseau de cent trente-six commutateurs de paquets, le temps de convergence, c'est-à-dire le temps nécessaire pour que le réseau ait pris en compte une modification, est de l'ordre de quelques secondes, le nombre de messages par commutateur de paquets étant de l'ordre de 10 à 20 environ.

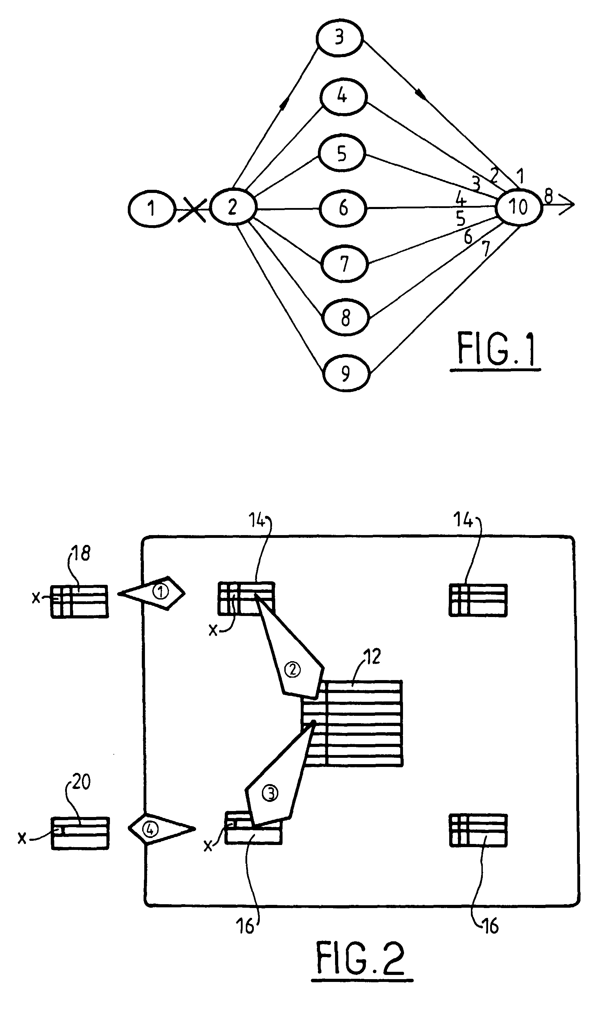

On décrit maintenant, en référence à la figure 1, un cas théorique qui met en évidence un défaut d'optimisation des procédés de gestion dans lesquels les informations échangées entre les commutateurs de paquets sont simplement des informations représentatives des chemins.

Sur la figure 1, on considère le cas dans lequel une liaison primaire, qui constitue le seul chemin direct entre un commutateur de paquets 1 et un commutateur voisin 2 est interrompue. Dans ce cas, le commutateur de paquets 2 modifie ses tables de routage et indique les nouveaux chemins correspondant à tous les commutateurs de paquets voisins, c'est-à-dire aux commutateurs 3 à 9. Lorsque le commutateur de paquets 3 reçoit les nouveaux chemins du commutateur de paquets 2, il effectue ses propres modifications et les transmet au commutateur de paquets 10. Celui-ci note donc qu'il ne peut pas atteindre le commutateur de paquets 1 par l'intermédiaire du commutateur de paquets 3. Il sélectionne donc le chemin passant par le commutateur de paquets 4. Il reçoit alors les informations du commutateur de paquets 4 lui indiquant l'indisponibilité de ce chemin, si bien qu'il sélectionne le chemin passant par le commutateur de paquets 5. Ce dernier lui indique alors l'indisponibilité du chemin vers le commutateur de paquets 1 par l'intermédiaire de ce commutateur de paquets 5, et ainsi de suite jusqu'au commutateur de paquets 9. Ce n'est que lorsqu'il a traité les informations de tous les commutateurs de paquets 3, 4, 5, 6, 7, 8 et 9 que le commutateur de paquets 10 sait qu'il n'existe plus aucun chemin vers le commutateur de paquets 1.

Ce comportement est dû au fait que le commutateur de paquets 10 ne dispose pas d'informations représentatives de la topologie du réseau, c'est-à-dire indiquant l'indisponibilité de la liaison entre les commutateurs de paquets 1 et 2, mais seulement d'informations représentatives de l'indisponibilité d'un chemin. Il ne tire toutes les conséquences de la rupture de la liaison primaire entre les commutateurs de paquets 1 et 2 que lorsqu'il a traité des messages de tous les commutateurs intermédiaires.

L'invention concerne une solution apportée à ce problème. Elle ne concerne qu'un seul événement parmi les différents événements qui affectent la topologie du réseau, cet événement unique étant la déconnexion d'une liaison primaire (plusieurs liaisons en parallèles entre deux commutateurs adjacents forment une seule liaison primaire). Selon l'invention, en plus des informations représentatives des chemins, les commutateurs de paquets reçoivent des informations représentatives des déconnexions de liaisons primaires.

Plus précisément, dans le cas de la figure 1, en plus des informations représentatives des chemins, le commutateur de paquets 2 puis le commutateur de paquets 3 transmettent les informations représentatives de la panne de la liaison entre les commutateurs de paquets 1 et 2. Dès qu'il reçoit cette information, le commutateur de paquets 10 peut supprimer, dans ses propres tables de routage, tous les chemins comprenant la liaison primaire qui reliait les commutateurs 1 et 2. De cette manière, il met à jour dans ses tables de routage tous les chemins passant par cette liaison.

Plus précisément, l'invention concerne un procédé de gestion décentralisée du routage de communications dans un réseau de commutateurs de paquets, du type qui comprend :
- des commutateurs de paquets, et
- des liaisons primaires reliant point à point les commutateurs de paquets,
- le nombre total des liaisons primaires de chaque commutateur de paquets étant limité,
le procédé étant du type qui comprend :
- la mémorisation, à chaque commutateur de paquets, d'une collection de tables de routage comprenant une table pour chaque autre commutateur de paquets qui peut constituer la destination d'une communication, et
- la transmission par chaque commutateur de paquets, à ses voisins, d'informations représentatives de chemins de routage lors d'une modification de ces chemins,
le procédé étant caractérisé en ce qu'il comprend en outre :
- la mémorisation, à chaque commutateur de paquets, d'une seconde collection de tables de routage contenant des informations (22) représentatives des liaisons primaires, et
lorsque ce commutateur de paquets reçoit des informations (22) représentatives de liaisons primaires qui indiquent l'indisponibilité d'une liaison primaire, le procédé comprend en outre
- la modification directe, par ce commutateur de paquets, des chemins compris dans sa première collection (12) de tables de routage par suppression de tous les chemins contenant la liaison primaire indisponible, et
- la transmission à ses voisins, par un commutateur de paquets, d'informations (24) représentatives de liaisons primaires.

De préférence, cette information représentative de liaisons primaires est associée à l'information représentative des chemins de routage dans les messages échangés par les commutateurs de paquets. Par exemple, elle se trouve dans l'en-tête d'un message , et les modifications de chemins se trouvent dans le corps du message.

Comme la mise à jour des tables de routage d'un commutateur de paquets s'effectue très rapidement dans le cas du seul événement pris en compte (déconnexion d'une liaison primaire), le temps de convergence et le nombre de messages échangés par les commutateurs de paquets sont fortement réduits.

Cependant, dans le procédé de l'invention, un cas défavorable peut se présenter lorsque plusieurs déconnexions sont réalisées de manière pratiquement simultanée, par exemple lors de pannes affectant des liaisons primaires de commutateurs de paquets distants ou affectant toutes les liaisons d'un commutateur de paquets.

La remise à jour plus rapide des tables de routage des commutateurs de paquets obtenue par le procédé précité permet un raccourcissement du temps de traitement, puisque le commutateur de paquets récepteur aurait finalement déterminé la remise à jour de ses tables de routage progressivement comme décrit en référence à la figure 1. Cependant, dans le cas où plusieurs connexions sont simultanées ou très voisines dans le temps et affectent des liaisons différentes, un commutateur de paquets peut recevoir des informations représentatives des mêmes événements par divers trajets ; il peut ainsi prendre en compte des dernières informations reçues qui correspondent en réalité à un événement antérieur à un événement qui vient d'être traité, si bien que l'état de ses tables de routage ne correspond plus à la topologie véritable du réseau. Il est donc essentiel qu'un commutateur de paquets, qui reçoit des informations impliquant des modifications de tables de routage, puisse déterminer s'il n'a pas déjà pris en compte ces informations.

A cet effet, l'invention met en oeuvre un système de comptage d'événements pour chaque liaison du réseau. Plus précisément, pour chaque liaison primaire, chaque commutateur de paquets contient un compteur qui progresse d'une unité chaque fois que la liaison primaire correspondante change d'état. Par exemple, dans toutes les liaisons connectées, la valeur du compteur est paire, et dans toutes les liaisons déconnectées, cette valeur est impaire. Cette information du compteur est transmise avec l'information représentative de la liaison primaire, si bien que, avant d'effectuer la prise en compte d'un événement de déconnexion d'une liaison primaire, un commutateur de paquets peut déterminer, par comparaison des informations reçues à une table historique, si cet événement a déjà été pris en compte. Plus précisément, il ne prend en compte un nouvel événement que lorsque le nombre compté correspondant associé est strictement supérieur au dernier nombre associé au dernier événement qu'il a déjà pris en compte pour cette liaison.

Ainsi, l'invention concerne aussi un procédé du type précité, mis en oeuvre avec des commutateurs de paquets qui contiennent chacun un compteur pour chaque liaison primaire, et qui comprend la modification du compteur d'une liaison primaire à chaque événement de connexion et de déconnexion de la liaison, et la transmission du nombre correspondant à un événement de déconnexion ou de connexion aux commutateurs de paquets voisins, avec l'information représentative de la liaison primaire.

De préférence, chaque commutateur de paquets conserve, pour chaque liaison primaire, un numéro de message attendu et un numéro de message émis, et il détermine si un message est obsolète par comparaison du numéro de message reçu au numéro de message attendu.

D'autres caractéristiques et avantages de l'invention ressortiront mieux de la description qui va suivre d'exemples de réalisation faite en référence aux dessins annexés sur lesquels :
la figure 1, déjà décrite, représente un schéma illustrant une situation qui peut apparaître dans un réseau maillé ;
la figure 2 est un schéma illustrant la mise en oeuvre du procédé décrit dans le document précité EP-A-0 571 261 ;
la figure 3 est un schéma analogue à la figure 2 représentant les opérations exécutées dans le cadre du procédé de l'invention ; et
la figure 4 est un schéma représentant comment est mis en oeuvre le procédé de l'invention pour éviter la prise en compte d'informations trop anciennes ou obsolètes.

On considère d'abord la mise en oeuvre du procédé décrit dans le document précité EP-A-0 571 261 en référence à la figure 2. Dans ce procédé, chaque commutateur de paquets comporte une collection de tables de routage, désignée par la référence 12, ainsi qu'une table de réception 14 et une table d'émission 16, par accès à une liaison primaire. Un message reçu 18 est transmis à la table de réception. S'il existe une différence, un traitement modifie les chemins dans la table de routage concernée. Si des différences sont apparues dans la table de routage, ces différences sont transmises à la table d'émission 16 et donnent lieu à un message d'émission 20.

On considère maintenant comment le procédé de l'invention modifie ce traitement. Si un traitement d'une déconnexion doit être réalisé par le procédé selon l'invention, il est effectué avant le traitement classique qu'on vient de décrire en référence à la figure 2. Cependant, ces deux traitements ne sont pas dissociés, comme l'indique la suite du présent mémoire.

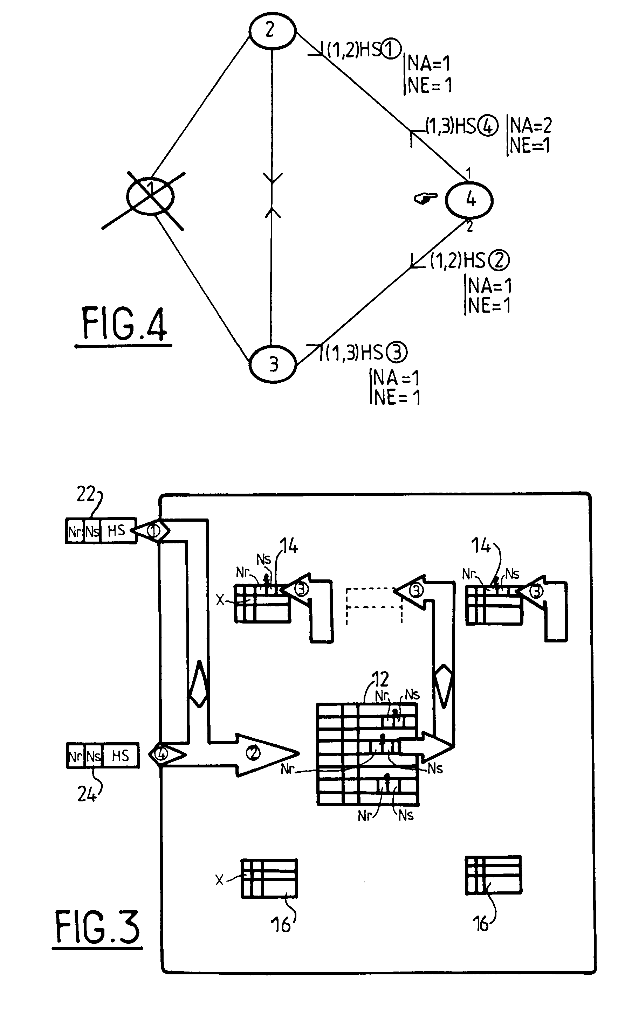

On se réfère à la figure 3 des dessins annexés. Un message 22 de déconnexion d'une liaison primaire comporte une identification de la liaison par un couple de numéros d'identification de commutateurs de paquets (par exemple (Nr, Ns)) et un nombre du compteur tenu par le commutateur de paquets dont provient le message (Nr ou Ns). A la réception du message 22 de déconnexion d'une liaison primaire dans une table historique des messages de déconnexion et dans le cas où la valeur donnée par le compteur associé indique que cette déconnexion n'a pas été déjà prise en compte, l'information véhiculée par ce message est enregistrée dans une collection de secondes tables de routage. S'il est déterminé que ce message de déconnexion n'a pas encore été pris en compte, la table principale de routage 12 est remise à jour par suppression, pour chaque commutateur de paquets, de tous les chemins comprenant la liaison primaire qui est devenue indisponible. Pour que l'information soit cohérente localement, il faut que la table de réception soit aussi mise à jour.

Une fois que l'information a ainsi été traitée, elle est diffusée aux autres commutateurs de paquets, sous forme d'un message 24 de déconnexion dans le cas où celle-ci n'a pas déjà été prise en compte, avec ou sans un message de routage.

On revient sur l'exemple décrit précédemment en référence à la figure 1. Dans le procédé de l'invention, le commutateur de paquets 10 connaît l'indisponibilité de la liaison primaire entre les commutateurs 1 et 2 dès la réception de l'information de déconnexion, si bien que tous les chemins comprenant cette liaison entre les commutateurs de paquets 1 et 2 sont supprimés immédiatement de sa collection de tables de routage.

On considère maintenant, en référence à la figure 4, le cas où plusieurs événements de déconnexions très rapprochés dans le temps existent dans la même région du réseau. Dans l'exemple de la figure 4, ces événements sont l'indisponibilité pratiquement simultanée des liaisons primaires d'un commutateur de paquets 1 aux commutateurs de paquets voisins 2 et 3. Ces événements "concurrents" provoquent l'émission de messages de routage qui peuvent arriver dans un ordre quelconque au niveau d'un autre commutateur de paquets 4. Ces messages peuvent comprendre des informations contradictoires puisque certaines peuvent être plus anciennes que d'autres. Comme un commutateur de paquets ne peut traiter qu'un seul événement à la fois, il ne peut donc pas faire la synthèse de tous les événements produits dans le réseau.

Il est donc nécessaire que le commutateur de paquets 4 sache quelle est l'information la plus récente. Pour cette raison, les messages d'informations représentatives des chemins relatifs à une déconnexion sont associés à une numérotation. Plus précisément, on utilise dans chaque commutateur, pour chaque liaison primaire, un numéro de message attendu NA et un numéro de message émis NE. Le numéro de message qui est reçu doit être supérieur d'une unité au numéro de message émis.

A la réception du message de déconnexion de la liaison (1, 2), provenant du commutateur de paquets 2, le commutateur de paquets 4 enregistre cette information et supprime tous les chemins comportant la liaison (1, 2).

L'information est alors renvoyée vers le commutateur de paquets 3, et elle indique que le commutateur de paquets 1 est inaccessible, car le seul chemin restant, celui de la liaison (1, 3), est un chemin de bouclage. On associe à ce message un numéro de message émis NE = 1.

Avant le traitement des chemins contenus dans le message provenant de la déconnexion de la liaison (1, 3), le commutateur 4 vérifie le numéro NA du message attendu par le commutateur de paquets 3. Ce commutateur n'a pas encore traité le dernier message émis car il attend encore le premier message de déconnexion (NA = 1 et non 2). Comme le message reçu par le commutateur de paquets 4 est obsolète pour ce commutateur, tous les chemins suivis par ce message doivent être vérifiés, notamment le chemin donné pour le commutateur de paquets 1 et qui n'est plus valide. Ce chemin n'est plus valide parce qu'il comprend la liaison (1, 2) et il est donc supprimé avant même d'être traité.

Ensuite, l'information de déconnexion est transmise vers le commutateur de paquets 2, indiquant que le commutateur de paquets 1 est inaccessible, car il n'existe plus aucun chemin pour ce commutateur de paquets.

On considère maintenant les résultats obtenus par mise en oeuvre d'une part du procédé décrit dans le document précité EP-A-0 571 261 et d'autre part selon l'invention.

On considère d'abord un événement de déconnexion d'une liaison unique. Dans le cas de deux liaisons différentes dans un réseau, on obtient par exemple, avec le procédé décrit dans le document précité EP-A-0 571 261, des temps de convergence d'environ 3,5 et 2,5 s respectivement. Lors du routage selon l'invention, pour les mêmes liaisons, on obtient respectivement des temps respectifs de 1,60 et 1,55 s, inférieurs d'un facteur presque égal à 2 à ceux du procédé classique. Dans le procédé classique, les nombres respectifs de messages échangés, dans le cas d'un réseau à 136 commutateurs de paquets, sont de l'ordre de 23 et 12 respectivement, alors que, selon l'invention, ils sont de l'ordre de 4,5 et 3 seulement.

On considère maintenant le cas de l'arrêt d'un commutateur de paquets. On envisage le cas de trois commutateurs de paquets différents et on note des temps de convergence d'environ 15 s, 13 s et 13,5 s pour le procédé classique. Avec le procédé de l'invention, on obtient des temps d'environ 4 s, 5,5 s et 2 s. Dans le cas du procédé classique le nombre de messages est voisin de 95 alors que, selon l'invention, il n'est que de 6 à 8.

On note donc que le procédé selon l'invention, avec son perfectionnement relatif au traitement des déconnexions multiples, permet l'obtention de résultats bien supérieurs à ceux du procédé classique.

Bien entendu, le procédé précité est surtout avantageux dans le cas où les déconnexions sont fréquentes. Si les déconnexions sont extrêmement rares, le procédé selon l'invention ne donne que des avantages marginaux. Par contre, si les déconnexions sont très fréquentes, par exemple lorsque les liaisons primaires sont des liaisons radioélectriques, le procédé de l'invention représente un progrès considérable pour la qualité et la rapidité des communications établies.

## Revendications

1. Procédé de gestion décentralisée du routage de communications dans un réseau de commutateurs de paquets, du type qui comprend :
- des commutateurs de paquets, et
- des liaisons primaires reliant point à point les commutateurs de paquets,
- le nombre total des liaisons primaires de chaque commutateur de paquets étant limité,
le procédé étant du type qui comprend :
- la mémorisation, à chaque commutateur de paquets, d'une collection (12) de tables de routage comprenant une table pour chaque autre commutateur de paquets qui peut constituer la destination d'une communication, et
- la transmission par chaque commutateur de paquets, à ses voisins, d'informations (18) représentatives de chemins de routage lors d'une modification de ces chemins,
et étant caractérisé en ce qu'il comprend en outre :
- la mémorisation, à chaque commutateur de paquets, d'une seconde collection de tables de routage contenant des informations (22) représentatives des liaisons primaires, et
lorsque ce commutateur de paquets reçoit des informations (22) représentatives de liaisons primaires qui indiquent l'indisponibilité d'une liaison primaire, le procédé comprend en outre
- la modification directe, par ce commutateur de paquets, des chemins compris dans sa première collection (12) de tables de routage par suppression de tous les chemins contenant la liaison primaire indisponible, et
- la transmission à ses voisins, par un commutateur de paquets, d'informations (24) représentatives de liaisons primaires.

2. Procédé selon la revendication 1, caractérisé en ce que les informations (22) représentatives de liaisons primaires sont associées aux informations (18) représentatives des chemins de routage dans les messages échangés par les commutateurs de paquets.

3. Procédé selon la revendication 1, caractérisé en ce que les informations (22) représentatives de la liaison primaire se trouvent dans l'en-tête d'un message, et les informations (18) représentatives des modifications de chemins se trouvent dans le corps du message.

4. Procédé selon l'une quelconque des revendications précédentes, caractérisé en ce que les commutateurs de paquets contiennent chacun un compteur pour chaque liaison primaire, et le procédé comprend la modification du compteur d'une liaison primaire à chaque événement de connexion et de déconnexion de la liaison, et la transmission du nombre correspondant à un événement de déconnexion ou de connexion aux commutateurs de paquets voisins, avec l'information (22) représentative de la liaison primaire.

5. Procédé selon la revendication 4, caractérisé en ce que chaque commutateur de paquets conserve, pour chaque liaison primaire, un numéro de message attendu et un numéro de message émis, et il détermine si un message est obsolète par comparaison du numéro de message reçu au numéro de message attendu.

## Patentansprüche

1. Verfahren zur dezentralen Verwaltung der Kommunikationsleitweglenkung in einem Paketvermittlungsnetz, enthaltend
- Paketvermittlungsstellen und
- Primärverbindungen, die jeweils zwei dieser Paketvermittlungsstellen miteinander verbinden,
- wobei die Gesamtzahl der Primärverbindungen jeder Paketvermittlungsstelle begrenzt ist,
wobei das Verfahren die folgenden Verfahrensschritte umfaßt:
- Speicherung einer Sammlung (12) von Leitweglenkungstafeln an jeder Paketvermittlungsstelle, wobei jeder anderen, ein mögliches Kommunikationsziel bildenden Paketvermittlungsstelle eine Tafel zugeordnet ist, und
- Übertragung von Informationen (18), welche Leitwegen entsprechen, durch jede der Paketvermittlungsstellen an die ihr benachbarten Paketvermittlungsstellen, sobald eine Änderung dieser Leitwege erfolgt ist,
wobei das Verfahren dadurch gekennzeichnet ist, daß es unter anderem die folgenden Verfahrensschritte umfaßt:
- Speicherung einer zweiten Sammlung von Leitweglenkungstafeln an jeder Paketvermittlungsstelle, wobei die Tafeln Informationen (22) enthalten, welche den Primärverbindungen entsprechen, und wobei
- das Verfahren dann, wenn die Paketvermittlungsstelle Informationen (22) über Primärverbindungen empfängt, welche anzeigen, das eine Primärverbindung unzugänglich ist, unter anderem die folgenden Verfahrensschritte enthält:
- direkte Änderung der in ihrer ersten Sammlung (12) von Leitweglenkungstafeln enthaltenen Leitwege durch die Paketvermittlunggsstelle durch Unterdrückung aller Wege, die die unzugängliche Primärverbindung enthalten, und
- Übertragung von Informationen (24), welche den Primärverbindungen entsprechen, durch eine Paketvermittlungsstelle an die ihr benachbarten Paketvermittlungsstellen.

2. Verfahren nach Anspruch 1, dadurch gekennzeichnet, daß die den Primärverbindungen entsprechenden Informationen (22) mit Informationen (18), welche Leitwegen entsprechen, auf denen von den Paketvermittlungsstellen Nachrichten ausgetauscht wurden, miteinander verknüpft werden.

3. Verfahren nach Anspruch 1, dadurch gekennzeichnet, daß die Informationen (22), die der Primärverbindung entsprechen, sich am Anfang einer Nachricht befinden, während die Informationen (18), die Veränderungen des Leitwegs betreffen, sich im Mittelteil der Nachricht befinden.

4. Verfahren nach einem der vorangegangenen Ansprüche, dadurch gekennzeichnet, daß die Paketvermittlungsstellen jeweils einen Zähler für jede Primärverbindung enthalten und das Verfahren die Veränderung des Primärverbindungs-Zählers für jede Herstellung bzw. Unterbrechung der Verbindung sowie die Übertragung der einer Verbindungsherstellung bzw. Verbindungsunterbrechung entsprechenden Ziffer zusammen mit der der Primärverbindung entsprechenden Information (22) an die benachbarten Paketvermittlungsstellen umfaßt.

5. Verfahren nach Anspruch 4, dadurch gekennzeichnet, daß jede Paketvermittlungsstelle für jede Primärverbindung eine Zahl der erwarteten und eine Zahl der abgesandten Meldungen umfaßt und durch einen Vergleich der Zahl der empfangenen Meldungen mit der Zahl der erwarteten Meldungen festlegt, ob eine Meldung veraltet ist.

## Claims

1. A decentralized method of managing call routing in a network of packet switches of the type that comprises:
• packet switches; and
• point-to-point primary links interconnecting the packet switches;
• the total number of primary links of each packet switch being limited;
the method being of the type which comprises:
• storing, in each packet switch, a collection (12) of routing tables comprising one table for each other packet switch which can constitute the destination of a call; and
• in the event of a modification in the routing paths, each packet switch transmitting to its neighbors information (18) representative of said routing paths;
and being characterized in that it further comprises:
• storing, in each packet switch, a second collection of routing tables containing information (22) representative of the primary links; and
when said packet switch receives information (22) representative of primary links indicating that a primary link is not available, the method further comprises:
• said packet switch directly modifying paths contained in its first collection (12) of routing tables by eliminating all paths containing the primary link that is unavailable; and
• a packet switch transmitting to its neighbors information (24) representative of primary links.

2. A method according to claim 1, characterized in that the information (22) representative of primary links is associated with information (18) representative of routing paths in messages interchanged by the packet switches.

3. A method according to claim 1, characterized in that the information (22) representative of the primary link is to be found in the header of a message, and the information (18) representative of path modifications is to be found in the body of the message.

4. A method according to any preceding claim, characterized in that each packet switch contains a counter for each primary link, and the method comprises modifying the counter of a primary link on each connection event and on each disconnection event of the link, and transmitting the number corresponding to a disconnection or connection event to the adjacent packet switches, together with the information (22) representative of the primary link.

5. A method according to claim 4, characterized in that for each primary link, each packet switch conserves an expected message number and a transmitted message number, and it determines whether a message is obsolete by comparing the received message number with the expected message number.
